# EUROPEAN PATENT APPLICATION

(11) **EP 1 520 760 A2**
(43) Date of publication of application: **06.04.2005**
(21) Application number: 04023217.5
(22) Date of filing: 29.09.2004
(51) Int. Cl.: B60T 8/00

(54) **Rotation detecting device**

(30) Priority: 30.09.2003 JP 2003341062; 19.03.2004 JP 2004080865
(71) Applicant: Aisin Seiki Kabushiki Kaisha, Kariya-shi, Aichi-ken 448-8650 (JP)
(72) Inventor: Hara, Takashi, c/o Int. Prop. Dept., Kariya-shi Aichi-ken, 448-8650 (JP); Taguchi, Kenichi, c/o Int. Prop. Dept., Kariya-shi Aichi-ken, 448-8650 (JP); Matsuo, Toshiyuki, c/o Int. Prop. Dept., Kariya-shi Aichi-ken, 448-8650 (JP)
(74) Representative: Leson, Thomas Johannes Alois, Dipl.-Ing.

(57) **Abstract**

A rotation detecting device for detecting a rotation number and a rotation direction of a rotating member based on at least two detection signals having different phases from each other and output from at least two sensor elements provided on the rotating member so as to face each other characterized in that the rotation detecting device includes a waveform processing means for performing a waveform processing on the detection signals based on one of a plurality of predetermined conversion rules, a setting signal receiving means for receiving a setting signal for determining the predetermined conversion rule to be used from the plurality of predetermined conversion rules, and a conversion rule setting means for determining the predetermined conversion rule to be used based on the setting signal received by the setting signal receiving means.

## Description

### FIELD OF THE INVENTION

This invention generally relates to a rotation detecting device. More particularly, the invention pertains to a rotation detecting device for detecting a rotation number and a rotation direction of a rotating. member.

### BACKGROUND

According to a vehicle-mounted system such as an antilock braking system and a vehicle stability control device, a rotation detecting device such as a vehicle speed sensor for measuring a rotation speed, a rotation number, and the like of a wheel (rotating member) is used for controlling. Some of the rotation detecting devices output an output signal in which information such as a rotation direction and a self-diagnosis result is included in addition to the rotation speed and the rotation number, for example.

JP10(1998)-332725A2 discloses a rotation detecting device outputting a determination signal in response to the rotation direction of the rotating member based on a detection signal from two sensor elements, and a pulse signal based on the determination signal and the detection signal. The rotation detecting device supplies the current between the input and output terminals with the amount depending on the pulse signal.

Further, JP2001-505691A2 discloses a rotation detecting device transmitting the rotation speed information supplied from a sensor element, and an additional data via a common single signal line. Accordingly, a pulse signal is generated based on a detection signal from the sensor element or the additional data is transmitted at a current amount different from the pulse signal when the pulse signal is not generated. In this case, the additional data includes wheel data, i.e. precisely, an abrasion of a brake lining, temperature of the wheel, and the like.

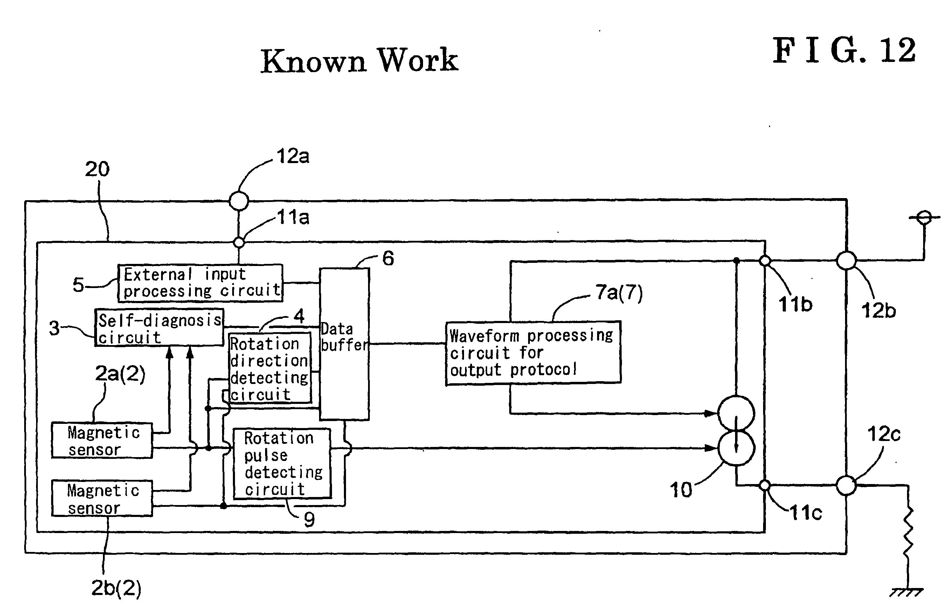

According to the above rotation detecting devices, the detection signal from the sensor element is converted based on a single conversion rule (output protocol) as shown in Fig. 12 and thus cannot be used for a system outputting an output signal by converting the detection signal based on a different output protocol. Generally, since the output protocol or the operating rotation range is different per system or manufacturer using the rotation detecting device, the different rotation detecting device is required per output protocol even if the same function is to be achieved. Further, the processing may be required to be changed according to the operating rotation range. Therefore, the number of types of the rotation detecting device may be increased, thereby increasing time for producing the rotation detecting device and a production cost.

The maximum rotation frequency required for the rotation detecting device to detect is defined as approximately 3kHz for the antilock braking system and approximately 10kHz for the automatic transmission system, for example. The rotation speed area required for the automatic transmission system is more than two times of that for the antilock braking system. At this time, if the rotation detecting device is produced with meeting with a requirement of 3kHz by defining the output signal of the rotation detecting device as a pulse waveform, a pulse interval of the output signal may be reduced along with the increase of the rotation speed of the rotating member. Finally, the pulse signals arranged next to each other. become in contact and thus the pulse shape may not be formed accordingly. If this condition occurs in a range of less than 10kHz, the rotation detecting device is not applicable to the system with 10kHz.

On the contrary, if a time width of the pulse is defined short so as to generate the pulse signal even under the fastest rotation speed (10kHz, for example) of the rotating member in view of the operating speed area of the rotation detecting device, the pulse generated may become unclear shape and then disappear in case of using a noise rejection filter (low-pass filter) and the like at a subsequent processing circuit. Accordingly, defining the time width of the pulse signal short may not be a preferable solution.

Thus, a need exists for a rotation detecting device applicable to a plurality of systems and manufactures by adapting a plurality of conversion rules even when a shape of an output waveform or an operating rotation range is different.

### SUMMARY OF THE INVENTION

According to an aspect of the present invention, a rotation detecting device for detecting a rotation number and a rotation direction of a rotating member based on at least two detection signals having different phases from each other and output from at least two sensor elements provided on the rotating member so as to face each other characterized in that the rotation detecting device includes a waveform processing means for performing a waveform processing on the detection signals based on one of a plurality of predetermined conversion rules, a setting signal receiving means for receiving a setting signal for determining the predetermined conversion rule to be used from the plurality of predetermined conversion rules, and a conversion rule setting means for determining the predetermined conversion rule to be used based on the setting signal received by the setting signal receiving means.

According to the aforementioned invention, a required conversion rule may be selected from the plurality of conversion rules, i.e. the conversion rule used by a system where the rotation detecting device is mounted is selected and then the waveform processing means is operated accordingly. As a result, the single rotating detection device may be applicable to a plurality of systems with a plurality of conversion rules. Thus, a type of the rotation detecting device may be decreased to thereby decrease time for production and a cost.

### BRIEF DESCRIPTION OF THE DRAWINGS

The foregoing and additional features and characteristics of the present invention will become more apparent from the following detailed description considered with reference to the accompanying drawings, wherein:

Fig. 1 is a circuit block diagram of a rotation detecting device according to a first embodiment of the present invention;

Fig. 2 is a waveform chart of an output signal for showing an example of a conversion rule of a detection signal according to the first embodiment of the present invention;

Fig. 3 is a waveform chart of the output signal for showing an example of the conversion rule of the detection signal according to the first embodiment of the present invention;

Fig. 4 is a circuit block diagram of the rotation detecting device according to a second embodiment of the present invention;

Fig. 5 is a circuit block diagram of the rotation detecting device according to a third embodiment of the present invention;

Fig. 6 is a circuit block diagram of the rotation detecting device according to a fourth embodiment of the present invention;

Fig. 7 is a waveform chart of the output signal for showing an example of the conversion rule of the detection signal according to a fifth embodiment of the present invention;

Fig. 8 is a circuit block diagram of the rotation detecting device according to a first example of the fifth embodiment of the present invention;

Fig. 9 is a circuit block diagram of the rotation detecting device according to a second example of the fifth embodiment of the present invention;

Fig. 10 is a circuit block diagram of the rotation detecting device according to a third example of the fifth embodiment of the present invention;

Fig. 11 is a circuit block diagram of the rotation detecting device according to a fourth example of the fifth embodiment of the present invention; and

Fig. 12 is a circuit block diagram of the rotation detecting device according to a known work.

### DETAILED DESCRIPTION

Embodiments of the present invention are explained referring to attached drawings. The rotation detecting device according to a first embodiment to a fourth embodiment includes a plurality of circuits as waveform processing means different from each other corresponding to a plurality of conversion rules different from each other. The rotation detecting device according to a fifth embodiment includes a waveform processing circuit applicable to the plurality of conversion rules. The rotation detecting device according to a sixth embodiment includes a structure of aforementioned two features.

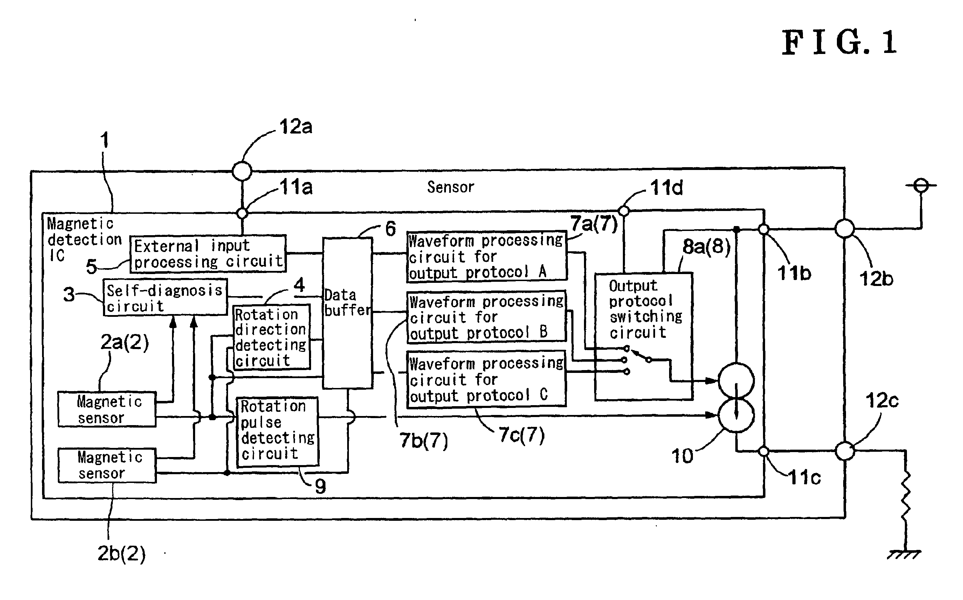

The first embodiment of the present invention is explained referring to Figs. 1 to 3. Fig. 1 shows a circuit structure of a sensor in which a magnetic detection IC 1, which is an example of the present invention, is mounted. An external input terminal 12a, a power supply terminal 12b, and a ground terminal 12c of the sensor are connected to an external input terminal 11a, a power supply terminal 11b, and a ground terminal 11c of the magnetic detection IC, respectively.

As shown in Fig. 1, the magnetic detection IC 1 includes magnetic sensors 2a and 2b serving as a sensor element 2, a data buffer 6 and a waveform processing circuit 7 each constituting a waveform processing means, an output protocol switching circuit 8a constituting a setting signal receiving means and a conversion rule setting means, a rotation pulse detecting circuit 9, a current output circuit 10 for output an output signal sent from the waveform processing circuit 7 to an outside of the magnetic detection IC 1, and the like. In addition, the magnetic detection IC 1 includes a protocol switching terminal 11d constituted by a dedicated terminal for setting the output protocol.

The magnetic sensors 2a and 2b are arranged on a rotating member, facing to each other for outputting two detection signals Pa and Pb respectively having different phases from each other. Specifically, the detection signals Pa and Pb output from the magnetic sensors 2a and 2b respectively are arranged so as to have a quarter phase difference therebetween. Then, a self-diagnosis circuit 3 for outputting a data of a wheel and the like, a rotation direction detecting circuit 4, and the like are arranged at a subsequent stage of the magnetic sensors 2a and 2b.

The data buffer 6 is constituted by a memory such as FIFO, a logic circuit, or the like for outputting the detection signals Pa and Pb sent from the magnetic sensors 2a and 2b, and a signal from an external input processing circuit 5 to the waveform processing circuit 7. The external input processing circuit 5 performs controlling or setting of the data buffer 6, the waveform processing circuit 7, and the like based on a signal sent from the external input terminal 11a. In case of utilizing a signal from the self-diagnosis circuit 3 or the rotation direction detecting circuit 4 in the waveform processing circuit 7, the data buffer 6 also outputs this signal to the waveform processing circuit 7.

The waveform processing circuit 7 receives the detection signal Pa of the magnetic sensor 2a and the detection signal Pb of the magnetic sensor 2b from the data buffer 6 and then performs the waveform processing on the detection signals Pa and Pb based on a predetermined conversion rule. According to the present embodiment, output protocols A, B and C are defined as the conversion rule. The waveform processing circuit 7 is provided per conversion rule. That is, a waveform processing circuit 7a for performing the waveform processing based on the output protocol A, a waveform processing circuit 7b for performing the waveform processing based on the output protocol B, and a waveform processing circuit 7c for performing the waveform processing based on the output protocol C are provided.

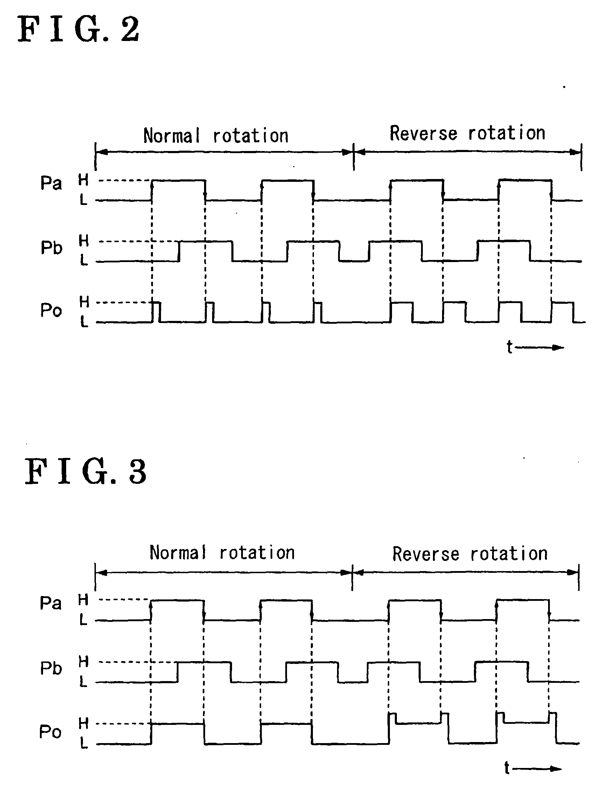

The waveform processing by the waveform processing circuit 7a is explained referring to Fig. 2 as an example of the waveform processing circuit 7. According to the output protocol A used in the waveform processing circuit 7a, a pulse signal is generated in response to a rising timing and a falling timing of the detection signal Pa. Then, a time width of the pulse signal generated in case of the rotation direction of the wheel being normal is defined to be shorter than that generated in case of the rotation direction being reverse for generating an output signal Po. The determination of the rotation direction of the wheel is conducted in response to the rising timing and the falling timing of the detection signal Pa before the pulse signal is generated. Specifically, the normal rotation is determined as the rotation direction of the wheel when the detection signal Pb is at L (low) level at a time of the detection signal Pa being changed from L to H (high), and the detection signal Pb is at H level at a time of the detection signal Pa being changed from H to L. Then, the output signal Po with a short pulse is generated. The reverse rotation is determined as the rotation direction of the wheel in a state other than the aforementioned state. Then, the output signal Po with a long pulse is generated accordingly.

Alternatively, the pulse signal may be generated in response to the rising timing and the falling timing of the detection signal Pb and then the output signal Po may be generated. In this case, the rotation direction of the wheel is determined in response to the rising timing and the falling timing of the detection signal Pb before the pulse signal is generated. Then, when the detection signal Pa is at H level at a time of the detection signal Pb being changed from L to H, and the detection signal Pa is at L level at a time of the detection signal Pb being changed from H to L, the normal rotation is determined as the rotation direction of the wheel. The reverse rotation is determined as the rotation direction of the wheel in a state other than the aforementioned state.

Further, the waveform processing by the waveform processing circuit 7b is explained referring to Fig. 3 as an example of another waveform processing circuit 7. According to the output protocol B used in the waveform processing circuit 7b, a signal is output in response to the detection signal Pa when it is determined that the rotation direction of the rotating member is normal. When it is determined that the rotation direction of the rotating member is reverse, a signal obtained by adding the pulse signal to the rising and falling of the detection signal Pa is output to generate the output signal Po. The determination of the rotation direction of the wheel is conducted in response to the rising timing and the falling timing of the detection signal Pa before the output signal Po is generated.

The output protocol switching circuit 8a is constituted by a switching circuit using a selector and the like, for example. The output protocol switching circuit 8a receives a setting signal for determining the waveform processing circuit 7 to be used among a plurality of waveform processing circuits 7 from the protocol switching terminal 11d, thereby determining the waveform processing circuit 7 to be used.

Further, the magnetic detection IC 1 includes the rotation pulse detecting circuit 9 on an output side of the magnetic sensor 2a. The rotation pulse detecting circuit 9 is a circuit for outputting the detection signal Pa of the magnetic sensor 2a to an outside of the magnetic detection IC 1. At this time, it may also be preferable to output the detection signal Pa to the outside of the magnetic detection IC 1 by synchronizing the detection signal Pa with the output signal from the waveform processing circuit 7.

In case of using the protocol switching terminal 11d of the magnetic circuit IC 1 under a normal operation condition, it may be preferable to apply a signal fixed at H level or L level to the protocol switching terminal 11d for a noise prevention and the like for the other input/output terminal.

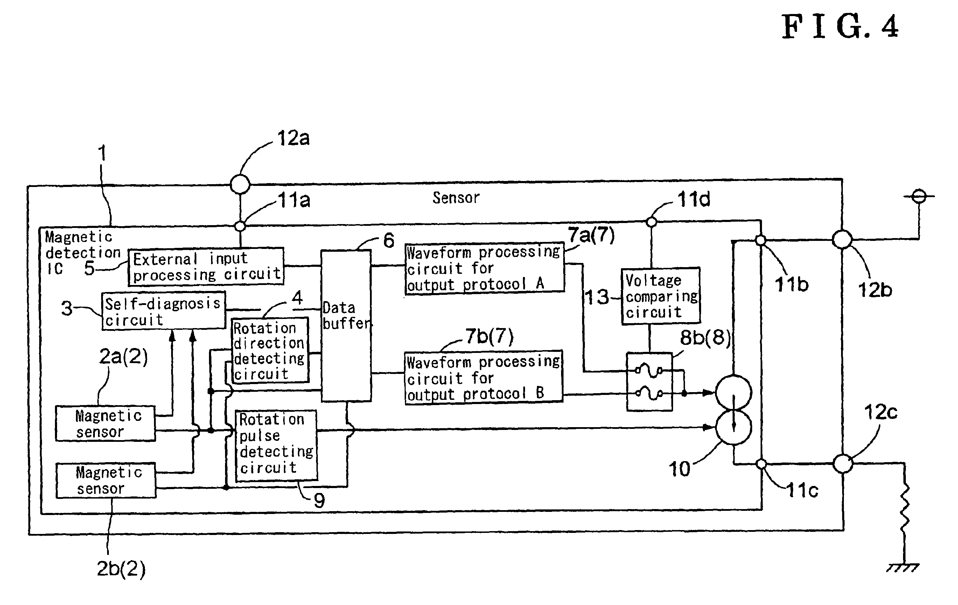

The second embodiment is explained referring to Fig. 4. The output protocol switching circuit 8a is used as the setting signal receiving means and the conversion rule setting means according to the first embodiment. According to the second embodiment, the setting signal receiving means and the conversion rule setting means are constituted by a voltage comparing circuit 13 and a fuse 8b. In case that the present embodiment is employed in a vehicle speed sensor and the like, the waveform processing circuit 7 is set once and then not required to be changed, i.e. should not be changed easily. Thus, the waveform processing circuit 7 is constituted so as to be settable only one time by using the fuse 8b, thereby obtaining the conversion rule setting means with a reduced cost and an easy structure.

The protocol switching terminal 11d is constituted by the dedicated terminal, which is the same state as the first embodiment. According to the second embodiment, a plurality of protocol switching terminals 11d corresponding to the number of the waveform processing circuits 7 are employed. For example, if the number of the waveform processing circuits 7 is up to N number of the power of two, the protocol switching terminals 11d of N number are provided.

The fuse 8b is provided on the output side of each waveform processing circuit 7. If the fuse 8b is further provided on an input side of each waveform processing circuit 7, the circuit not required for the normal operation, i.e. the waveform processing circuit 7 not designated, is not operated, thereby reducing a power consumption of the magnetic detection IC1.

The voltage comparing circuit 13 constituted by a circuit such as a comparator cuts all fuses 8b other than the fuse 8b on the output side of the waveform processing circuit 7 being designated based on the voltage level input to the protocol switching terminal 11d. For example, in case that the H signal is applied to the protocol switching terminal 11d, the fuse 8b provided on the output side of the waveform processing circuit 7b is cut so that the output from the waveform processing circuit 7a can be determined. In the same way, in case that the L signal is applied to the protocol switching terminal 11d, the fuse 8b provided on the output side of the waveform processing circuit 7a is cut so that the output from the waveform processing circuit 7b can be determined.

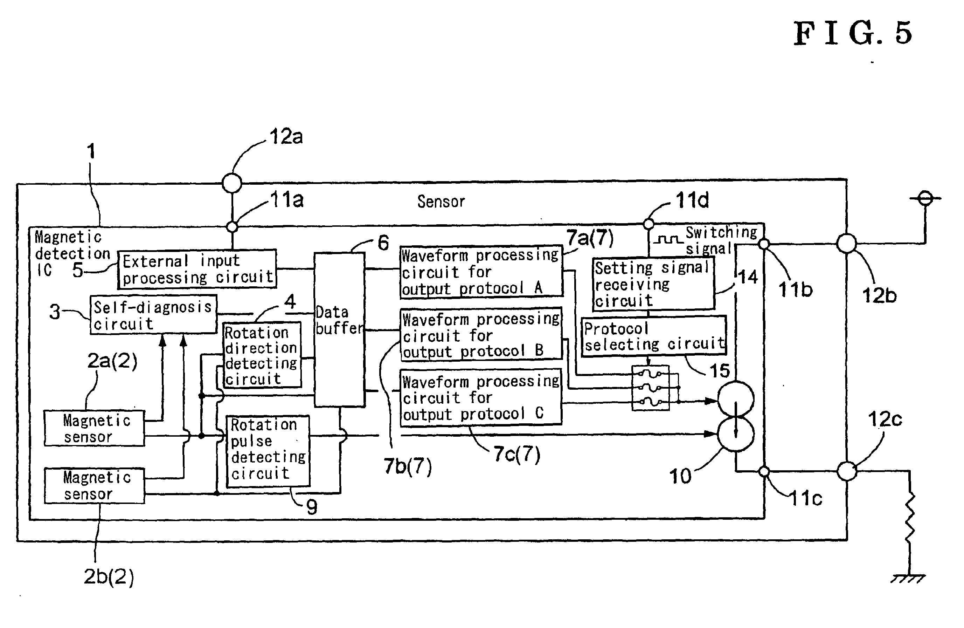

The third embodiment of the present invention is explained referring to Fig. 5. According to the third embodiment, the setting signal receiving means receives the.setting signal from the protocol switching terminal 11d constituted by using a terminal other than that defined as the power supply terminal 11b or the ground terminal 11c under the normal operation condition. The conversion rule setting means determines the waveform processing circuit 7 based on the setting signal applied to the protocol switching terminal 11d. Then, the setting signal receiving means is constituted by a setting signal receiving circuit 14 while the conversion rule setting means is constituted by a protocol selecting circuit 15 and the fuse 8b. The single protocol switching terminal 11d is employed according to the third embodiment.

The setting signal receiving circuit 14 is constituted by, for example, any one of a serial input circuit, a timer input circuit, and an AD input circuit. The serial input circuit determines a signal sequence per waveform processing circuit 7 and then obtains the waveform processing circuit 7 to be determined based on a pattern of the signal sequence of the serial signal input to the protocol switching terminal 11d. The timer input circuit determines a time width of the pulse signal per waveform processing circuit 7 and obtains the waveform processing circuit 7 to be determines based on the time width of the pulse signal input to the protocol switching terminal 11d. The AD input circuit determines a voltage threshold value per waveform processing circuit 7 and obtains the waveform processing circuit 7 to be determines based on the voltage level input to the protocol switching terminal 11d.

The protocol selecting circuit 15 obtains the data of the waveform processing circuit 7 to be determined from the setting signal receiving circuit 14 and then cuts all the fuses 8b other than the fuse 8b on the output side of the waveform processing circuit 7 being designated.

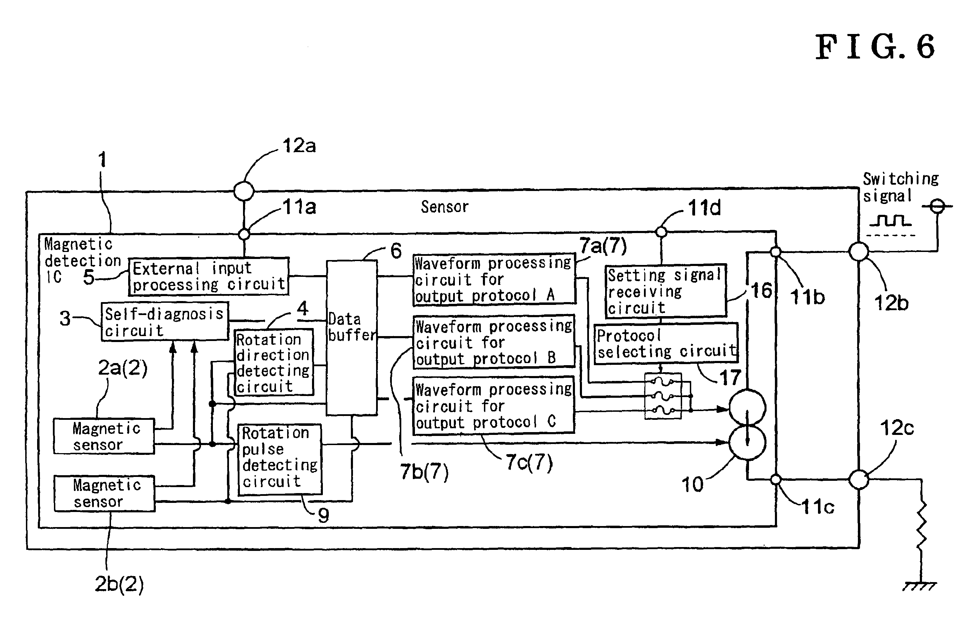

The fourth embodiment of the present invention is explained referring to Fig. 6. According to the fourth embodiment, the setting signal receiving means receives the setting signal from a setting terminal constituted by using the terminal defined as the power supply terminal 11b or the ground terminal 11c under the normal operation condition. The conversion rule setting means determines the waveform processing circuit 7 based on the setting signal applied to the setting terminal. The setting signal receiving means is constituted by a setting signal receiving circuit 16 while the conversion rule setting means is constituted by a protocol selecting circuit 17 and the fuse 8b. The dedicated protocol switching terminal 11d is not employed according to the fourth embodiment.

The setting signal receiving circuit 16 is constituted by the serial input circuit, or the timer input circuit, for example. Specifically, the setting signal receiving circuit 16 can obtain the data related to the waveform processing circuit 7 to be determined by applying the pulse signal at any voltage being preset between the power supply terminal 12b and the ground terminal 12c.

According to the aforementioned first, second, third, and fourth embodiments, the setting signal is applied to the protocol switching terminal 11d (or the setting terminal). However, instead, the protocol switching terminal 11d may only designate whether the determination of the waveform processing circuit 7 is to be conducted or not, for example. The designation of the waveform processing circuit 7 can be conducted by sharing any other terminal such as the terminal defined as the input terminal under the normal operation condition, thereby reducing the cost since the dedicated protocol switching terminal 11d for designating the waveform processing circuit 7 is not required.

In addition, according to the first, second, third and fourth embodiments, the waveform processing circuit is provided individually per output protocol. At this time, instead, a function block may be made per processing content of the waveform processing. Then, the required function block according to the conversion procedure of the output protocol may be selectively used. For example, according to the first embodiment, the waveform processing circuits 7a and 7b both determine the rotation direction of the wheel. In this case, instead, a common circuit for determining the rotation direction of the wheel may be provided. The waveform processing circuits 7a and 7b perform an original processing of the output protocol such as the generation or addition of the pulse signal. Then, the conversion rule setting means is constituted such that the common circuit and the waveform processing circuit 7a are used when the output protocol A is determined while the common circuit and the waveform processing circuit 7b are used when the output protocol B is determined. Accordingly, a chip size of the magnetic detection IC 1 may be reduced and also time or work for making or verifying the circuit may be reduced, thereby decreasing a production cost. In addition, the information of the normal rotation or reverse rotation of the wheel may be obtained by the output from the rotation direction detecting circuit 4 and then used by the waveform processing circuits 7a and 7b.

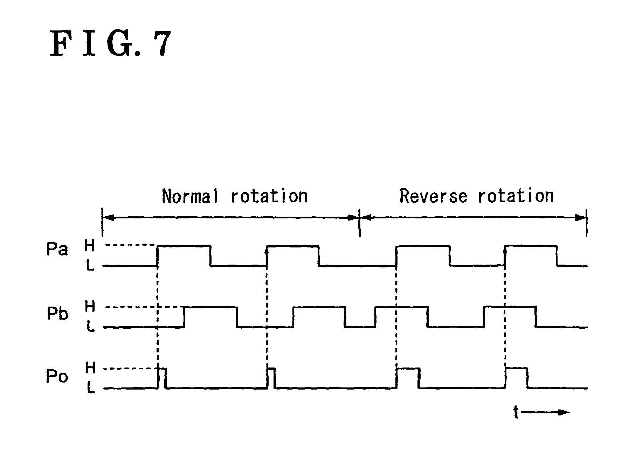

The fifth embodiment of the present invention is explained referring to Figs. 2 and 7. Fig. 2 shows an example of the waveform processing of the waveform processing circuit 7a. According to the output protocol A used in the waveform processing circuit 7a, a pulse signal is generated in response to the rising timing and the falling timing of the detection signal Pa. Then, a time width of the pulse signal generated in case of the rotation direction of the wheel being normal is defined to be shorter than that generated in case of the rotation direction being reverse for generating an output signal Po.

When the rotation speed of the wheel is increased, a pulse interval of the output signal Po is reduced, i.e. narrowed. Finally, the pulse signal arranged next to each other may be in contact and thus the pulse waveform is not generated. It may be possible to define the time width of the pulse short by the output protocol so that the pulse signal can be generated under the fastest rotation speed of the wheel in view of an operating speed range of the rotation detecting device. However, in case of using a noise rejection filter (low-pass filter) and the like at a subsequent processing circuit, the pulse generated may become unclear shape and then disappear. Accordingly, defining the time width of the pulse signal short may not be a preferable solution.

Then, a plurality of output protocols, i.e. two output protocols in this case, are employed for solving the above problem. That is, the respective protocols are provided for generating the output signal Po in response to the rising timing and the falling timing of the detection signal Pa (shown in Fig. 2, i.e. base conversion rule), and for generating the output signal Po in response to the rising timing or the falling timing of the detection signal Pa (shown in Fig. 7, i.e. high-speed applicable conversion rule). The waveform chart in Fig. 7 shows a case in which the output signal Po is generated in response to the rising timing of the detection signal Pa. According to the aforementioned embodiments, two magnetic sensors 2a and 2b are provided. However, instead, at least three magnetic sensors may be provided, acquiring the difference among those sensors.

A required maximum rotation frequency is approximately 3kHz for an antilock braking system, and approximately 10kHz for an automatic transmission system, for example. The aforementioned two protocols may be switched therebetween with respect to the rotation frequency of approximately 5 to 6 kHz so that the rotation detecting device may be applicable to both the antilock braking system and the automatic transmission system by using the equal time width.

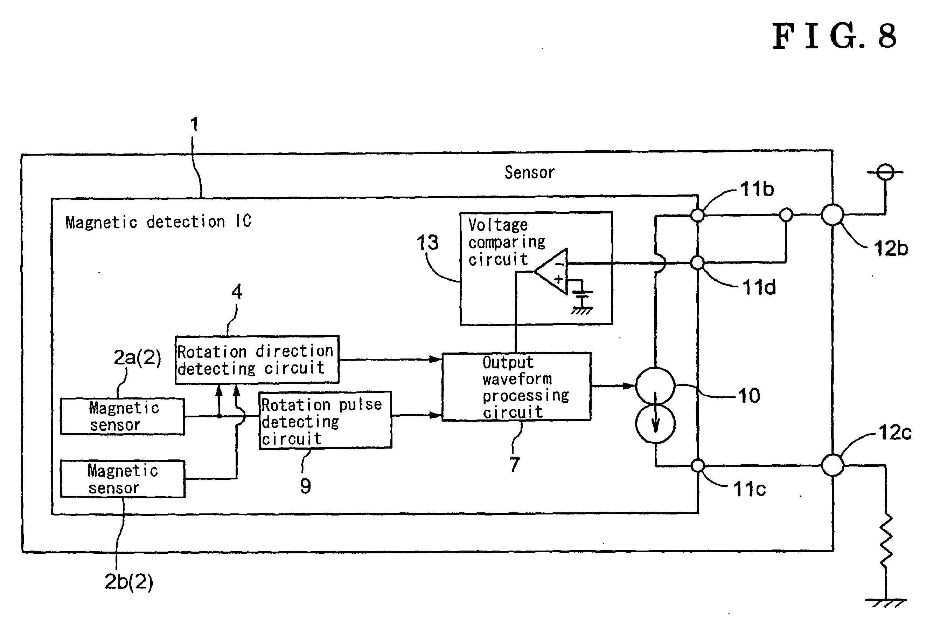

A method for switching the conversion rule is explained referring to Figs. 8 to 11. According to the circuit structure shown in Figs. 1, 4 to 6, the waveform to be output is selected after each waveform is generated according to each, i.e. different, conversion rule. The switching of the conversion rule can be achieved by using the circuit structure similar to the aforementioned circuit structure shown in Figs. 1, 4 to 6. However, the different circuit structure is explained in the following.

When the circuit is constituted as shown in Figs. 1, 4 to 6, the respective waveforms are generated according to the different conversion rules from each other in the plurality of output waveform processing circuits 7. In this case, the output signal Po from one waveform processing circuit 7 is generated according to the conversion rule for generating the output signal Po in response to the rising timing and the falling timing of the detection signal Pa under the high-speed rotation condition. Therefore, the pulse shape may not be formed as mentioned above.

Whereas, the detection signal Po from another waveform processing circuit 7 is generated according to the conversion rule for generating the output signal Po in response to the rising timing or the falling timing of the detection signal Pa and thus the pulse shape is formed. Then, the output signal Po with the pulse shape being formed is selected in the output protocol switching circuit 8 provided at the subsequent stage of the output waveform processing circuit 7, so that no remarkable inconvenience my be produced practically. However, depending on the structure of the output waveform processing circuit 7, problems such as an oscillation of the circuit and increase of the power consumption may occur. In addition, the circuit generating the signal with no possibility of being selected is employed.

Therefore, according to another circuit structure explained in the following, the conversion rule is selected beforehand. Then, the output signal Po is generated based on the selected conversion rule. The example is explained in Figs. 8 to 11. In each figure, the single output waveform processing circuit 7 is provided such that the conversion rule being selected and determined is applied in the output waveform processing circuit 7.

In addition, the data buffer 6, the external input processing circuit 5, the associated terminals 11a, 12a and the like shown in Figs. 1, 4 to 6 are not shown in Figs. 8 to 11 for a simple explanation.

A first example of the fifth embodiment is explained referring to Fig. 8. The setting signal receiving means and the conversion rule setting means are constituted by the voltage comparing circuit 13. The voltage comparing circuit 13 is constituted by a comparator, for example. One input terminal (negative terminal in Fig. 8) out of two input terminals of the comparator may be regarded as the setting signal receiving means. The other input terminal (positive terminal in Fig. 8, for inputting the threshold voltage) out of two input terminals, the comparator itself, and an output terminal thereof may be regarded as the conversion rule setting means.

In the output waveform processing circuit 7, the output signal Po is generated in response to the rising timing or the falling timing of the detection signal Pa when the output of the voltage comparing circuit 13 is at H level while the output signal Po is generated in response to the rising timing and the falling timing of the detection signal Pa when the output of the voltage comparing circuit 13 is at L level. Fig. 8 shows a state in which the threshold voltage is fixed to a lower value than the power supply voltage, and the terminal 11d is connected to the power supply so that the output of the voltage comparing circuit 13 is set to H level.

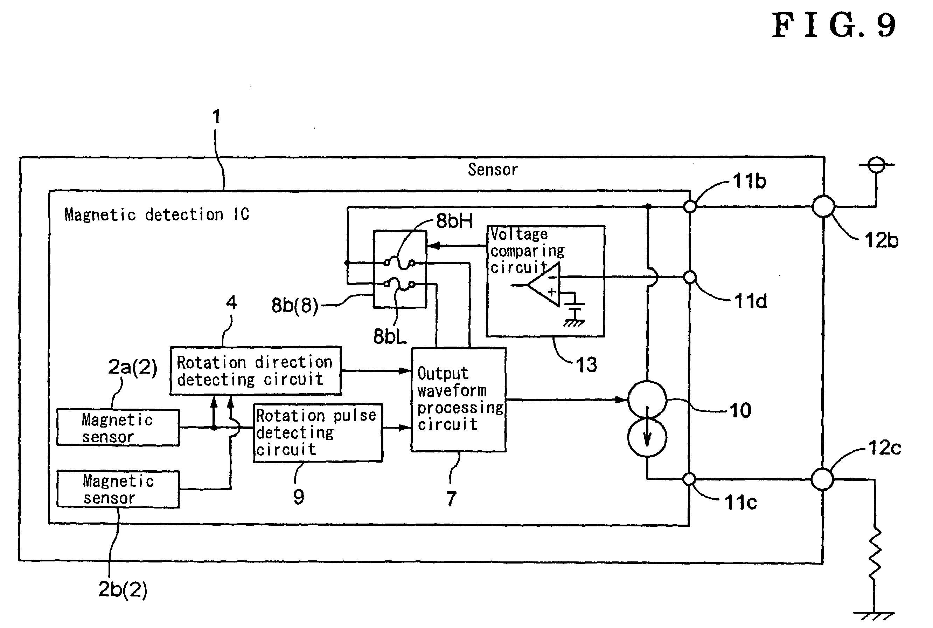

A second example of the fifth embodiment is explained referring to Fig. 9. According to the present embodiment, the setting signal receiving means and the conversion rule setting means are constituted by the voltage comparing circuit 13 and the fuse 8b. For example, when the output of the voltage comparing circuit 13 is at H level, a fuse 8bH is cut. When the output of the voltage comparing circuit 13 is at L level, a fuse 8bL is cut. One terminal of the fuse 8bH or 8bL is connected to the power supply terminal 11b while the other terminal is connected to the output waveform processing circuit 7. The output waveform processing circuit 7 outputs the output signal Po by changing a generated protocol depending on which setting signal input via the fuse 8bH or 8bL is at H level.

At this time, both setting signals are desirably grounded on the output waveform processing circuit 7 side via a resistance (not shown) so that the input of the setting signal via the fuse being cut to the output waveform processing circuit 7 is prevented from floating.

In case that the present embodiment is employed in the vehicle speed sensor and the like, the output waveform processing circuit 7 is set once and then not required to be changed, i.e. should not be changed easily. Thus, the output waveform processing circuit 7 is constituted so as to be settable only one time by using the fuse 8b, thereby obtaining the conversion rule setting means with a reduced cost and an easy structure.

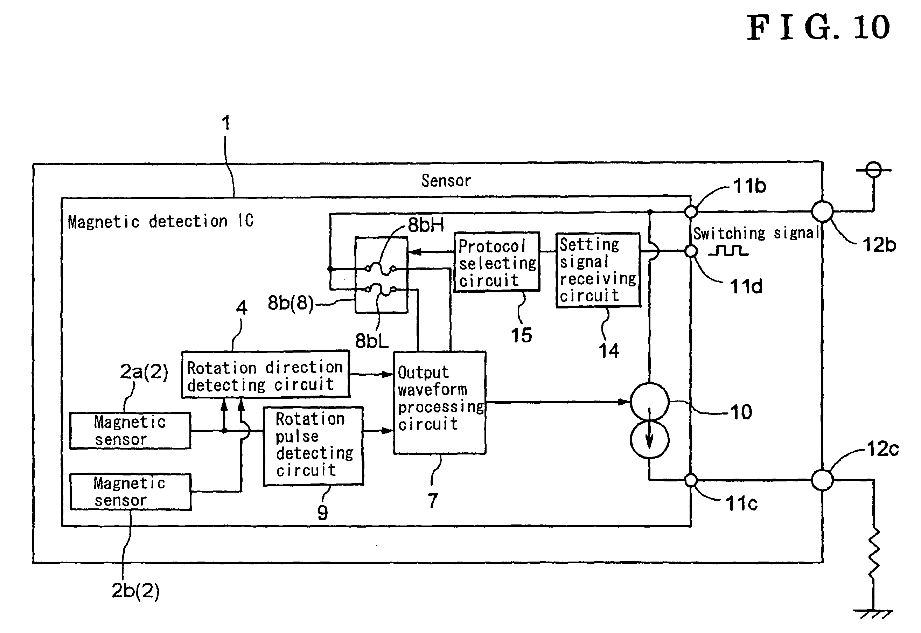

A third example of the fifth embodiment is explained referring to Fig. 10. According to the present embodiment, the setting signal receiving circuit 14 receives the setting signal from the protocol switching terminal 11d constituted by using a terminal other than that defined as the power supply terminal 11b or the ground terminal 11c under the normal operation condition. The protocol selecting circuit 15 cuts one of the fuses 8b based on the setting signal applied to the protocol switching terminal 11d and determines the conversion rule used by the output waveform processing circuit 7. How to determine the conversion rule by cutting the fuse is same as the second example of the fifth embodiment.

The setting signal receiving circuit 14 is constituted by using one of the serial input circuit, the timer input circuit, and the AD input circuit, for example. The serial input circuit determines a signal sequence per conversion rule and then obtains the conversion rule to be determined based on a pattern of the signal sequence of the serial signal input to the protocol switching terminal 11d. The timer input circuit determines a time width of the pulse signal per conversion rule and obtains the conversion rule to be determined based on the time width of the pulse signal input to the protocol switching terminal 11d. The AD input circuit determines a voltage threshold value per conversion rule and obtains the conversion rule to be determined based on the voltage level input to the protocol switching terminal 11d.

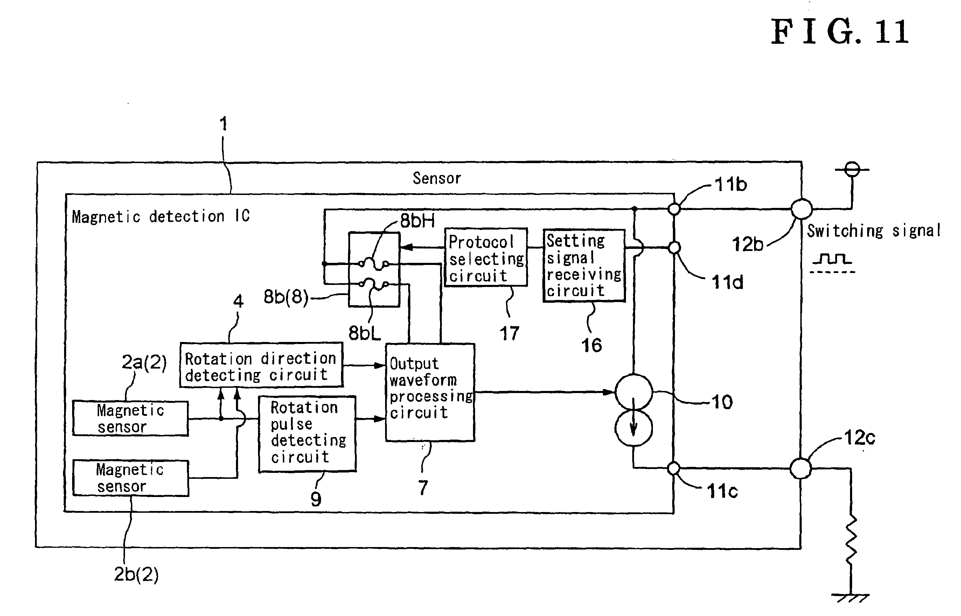

The fourth example of the fifth embodiment is explained referring to Fig. 11. According to the present embodiment, the setting signal receiving circuit 16 receives the setting signal from the setting terminal constituted by a terminal defined as the power supply terminal 11b or the ground terminal 11c under the normal operation condition. The protocol selecting circuit 17 cuts one of the fuses 8b based on the setting signal applied to the setting terminal, and determines the conversion rule used by the output waveform processing circuit 7. The method for setting the conversion rule by fuse cutting is same as the second example of the fifth embodiment. In addition, the type of circuit constituting the setting signal receiving circuit 14 is same as that in the third example of the fifth embodiment.

According to the first, second, third and fourth embodiments, the respective waveforms are generated mainly based on the different conversion rules from each other and then the waveform to be output is selected. According to the fifth embodiment, the conversion rule is selected beforehand and then the waveform to be output is generated based on the selected conversion rule. At this time, these two methods may be employed at once.

For example, the conversion rule is selected within the identical output waveform processing circuit 7 for generating the waveform as in the fifth embodiment in case of determining the conversion rule based on which the output signal Po is output, i.e. the output signal Po is output in response to the rising timing and the falling timing of the detection signal Pa, or the rising timing or the falling timing of the detection signal Pa. Then, the waveform to be output is selected after the respective waveforms are generated in the different output waveform processing circuits 7 based on each different conversion rule in case of selecting the pulse shape, i.e. which waveform in Fig. 2 or 3 is used. Therefore, the rotation detecting device applicable to huge variety of systems or manufacturers may be achieved by adapting the plurality of conversion rules.

According to the aforementioned embodiments, by constituting the dedicated terminal for determining the conversion rule with the terminal other than that defined as the power supply terminal or the ground terminal under the normal operating condition, the setting signal receiving means and the conversion rule setting means may be achieved with a simple circuit structure. In addition, by constituting the dedicated terminal for determining the conversion rule with the terminal defined as the power supply terminal or the ground terminal under the normal operating condition, the dedicated terminal for determining the conversion rule is not required to be provided and an outer casing and the like may be still used, thereby preventing a cost increase. The conversion rule may be easily determined by receiving the setting signal from the setting terminal by using aforementioned either method.

Further, according to the aforementioned embodiments, the waveform processing means is provided corresponding to each conversion rule. The selection of the conversion rule and the waveform processing means are performed at the same time by the receiving signal received by the setting signal receiving means. Thus, the conversion rule is easily determined. In this case, the output of the rotation detecting device may be determined on the output side of each waveform processing means.

Furthermore, according to the aforementioned embodiments, each waveform processing is selectively performed by the rising timing and the falling timing of the detection signal, or the rising timing or the falling timing of the detection signal. Then, when the rotation speed of the rotating member is increased, the conversion rule for performing the waveform processing in response to the rising timing or the falling timing of the detection signal may be employed. Thus, the time width of the pulse of the output signal may be maintained at a certain length. Even when the noise rejection filter (low-pass filter) is used at the subsequent processing circuit, the pulse generated is prevented from becoming unclear shape and disappearing, thereby obtaining a preferable rotation detecting device.

Furthermore, according to the aforementioned embodiments, the rotation detecting device is applicable to both the low-speed rotation range and the high-speed rotation range of the rotating member depending on the selection of the waveform processing timing. In addition, the rotation detecting device is applicable to further different waveform.

Furthermore, according to the aforementioned embodiments, the output signal is generated by obtaining the rotation direction, the result of the self-diagnosis, the external signal and the like in addition to the rotation number of the rotating member, thereby obtaining the rotation detecting device with the practical conversion rule.

## Claims

1. A rotation detecting device for detecting a rotation number and a rotation direction of a rotating member based on at least two detection signals (Pa, Pb) having different phases from each other and output from at least two sensor elements (2a, 2b) provided on the rotating member so as to face each other **characterized in that** the rotation detecting device further includes a waveform processing means (6,7) for performing a waveform processing on the detection signals based on one of a plurality of predetermined conversion rules, a setting signal receiving means (8a, 8b, 13,14,16) for receiving a setting signal for determining the predetermined conversion rule to be used from the plurality of predetermined conversion rules, and a conversion rule setting means (8a, 8b, 13, 15, 17) for determining the predetermined conversion rule to be used based on the setting signal received by the setting signal receiving means.

2. A rotation detecting device according to claim 1, wherein the setting signal receiving means (16) receives the setting signal from a setting terminal constituted by using a terminal defined as a power supply terminal (11b) or a ground terminal (11c) under a normal operating condition, and the conversion rule setting means (17, 8b) determines the predetermined conversion rule based on the setting signal applied to the setting terminal.

3. A rotation detecting device according to claim 1, wherein the setting signal receiving means (8a, 14, 13, 14) receives the setting signal from a setting terminal (11d) constituted by a terminal other than that defined as a power supply terminal (11b) or a ground terminal (11c) under a normal operating condition, and the conversion rule setting means (13, 15, 8b) determines the predetermined conversion rule based on the setting signal applied to the setting terminal.

4. A rotation detecting device according to claim 1, wherein the waveform processing means (7) includes a plurality of waveform processing means for performing the waveform processing based on the respective predetermined conversion rules, and the setting signal receiving means (8a, 8b, 13, 14, 16) receives the setting signal for setting the waveform processing means to be used from the plurality of waveform processing means while the conversion rule setting means (8a, 8b, 13, 15, 17) determines the waveform processing means to be used based on the setting signal received by the setting signal receiving means for determining the conversion rule to be used.

5. A rotation detecting device according to claim 4, wherein the plurality of conversion rules include a base conversion rule for performing the waveform processing in response to a rising timing and a falling timing of the detection signal, and a high-speed applicable conversion rule for performing the waveform processing in response to the rising timing or the falling timing of the detection signal.

6. A rotation detecting device according to claim 4, wherein the conversion rule for specifying a timing of the waveform processing and the conversion rule for specifying a waveform generated by the waveform processing can be both determined.

7. A rotation detecting device according to claim 1, wherein the conversion rule obtains the rotation number of the rotating member based on at least two detection signals, and at least one of the rotation direction, a self-diagnosis result of the rotating member, and an external signal of another sensor element arranged adjacent to the sensor elements.

8. A rotation detecting device according to claim 4, wherein the conversion rule setting means (13, 15, 17) includes fuses (8b) provided on respective output sides of the waveform processing means (7) and cuts the fuse of the waveform processing means not to be used based on the setting signal received by the setting signal receiving means (13, 14, 16).

9. A rotation detecting device according to claim 4, wherein the conversion rule setting means (17) includes a plurality of fuses (8b) for connecting a terminal defined as a power supply terminal (11b) or a ground terminal (11c) and each waveform processing means (7), and cuts the fuse of the waveform processing means not to be used based on the setting signal received by the setting signal receiving means (16).

10. A rotation detecting device according to claim 1, wherein the conversion rule setting means (13, 15, 17) includes a terminal (11d) provided corresponding to the plurality of predetermined conversion rules and a plurality of fuses (8b) provided between the terminal provided corresponding to the plurality of predetermined conversion rules and a terminal defined as a power supply terminal (11b) or a ground terminal (11c), and cuts the fuse provided corresponding to the predetermined conversion rule to be used or not to be used based on the setting signal received by the setting signal receiving means (13, 14, 16).
